# FASCICULE DE BREVET EUROPEEN

(11) **EP 0 780 213 B1**
(45) Date de publication et mention de la délivrance du brevet: **29.03.2000**
(21) Numéro de dépôt: 96402750.2
(22) Date de dépôt: 16.12.1996
(51) Int. Cl.: B29C 70/48, B29C 70/54

(54) **Procédé de fabrication d'une pièce en matériau composite par moulage par transfert de résine, et pièce obtenue par ce procédé**
Verfahren zur Herstellung eines Gegenstandes aus Verbundwerkstoff durch Transfer-Spritzgiessen von Kunstharz (R.T.M.) und dadurch hergestellter Gegenstand
Process for manufacturing an article made of composite material by resin transfer moulding and article obtained thereby

(30) Priorité: 18.12.1995 FR 9514971
(43) Date de publication de la demande: 25.06.1997
(73) Titulaire: AEROSPATIALE Société Nationale Industrielle, 75781 Paris Cédex 16 (FR)
(72) Inventeur: Guittard, Dominique, 75016 Paris (FR); Soro, Daniel, 93800 Epinay sur Seine (FR); Poignonec, Jean Marc, 44360 St Etienne de Montluc (FR)
(74) Mandataire: Dubois-Chabert, Guy

(56) Documents cités:
- EP-A- 0 343 736
- US-A- 5 204 042
- US-A- 5 281 388

## Description

### Domaine technique

L'invention concerne un procédé de fabrication d'une pièce en matériau composite, de structure monolithique ou sandwich, utilisant la technique de moulage par transfert de résine.

L'invention concerne également une pièce dont la fabrication a été effectuée selon ce procédé.

Le procédé selon l'invention peut être utilisé dans de nombreuses industries, pour la fabrication de pièces sensiblement en forme de panneaux plans ou non. Il trouve une application privilégiée dans l'industrie aéronautique.

### Etat de la technique

La technique de moulage par transfert de résine, dite technique RTM ("Resin Transfer Molding") est utilisée de plus en plus fréquemment pour fabriquer des pièces en matériau composite.

Selon cette technique, plusieurs couches de fibres sèches, c'est-à-dire non imprégnées de résine, sont placées dans un moule qui présente la forme de la pièce à réaliser. Les fibres peuvent être tissées ou non tissées, selon la nature de la pièce. Le moule étant chauffé à une température relativement importante, on injecte sous pression dans le moule sous vide une résine présentant une très faible viscosité. L'injection est effectuée à proximité d'une extrémité du moule, de façon à remplir totalement ce dernier en imprégnant les fibres et en remplissant les espaces qui les séparent. Lorsque l'injection de la résine est terminée, la pièce est soumise à un cycle de polymérisation avant d'être démoulée.

Par rapport à la technique traditionnelle de fabrication des pièces en matériau composite par drapage, cette technique RTM présente des avantages de mise en oeuvre importants qui expliquent son succès grandissant. De plus, comme toute technique de moulage, elle assure normalement une reproductibilité et un dimensionnement parfaits des pièces, ainsi qu'un bon état de surface.

Les excellentes caractéristiques de reproductibilité et de dimensionnement des pièces sont assurées lorsque les pièces sortant du moule ne nécessitent pratiquement pas de retouche. On se trouve dans cette situation dès lors que le taux de fibres est relativement faible (par exemple, compris entre 15 % et 25 %), ce qui correspond à la plupart des applications courantes, notamment dans l'industrie automobile.

La situation est sensiblement différente lorsque le taux de fibres des pièces à fabriquer est relativement élevé (par exemple, compris entre 55 % % et 60 %), comme c'est notamment le cas dans l'industrie aéronautique. En effet, la préforme de fibres sèches est alors fortement compactée lorsque le moule est fermé. Dans ces conditions, une bonne imprégnation des fibres par la résine nécessite d'utiliser des résines plus fluides, et/ou d'augmenter la pression d'injection.

Compte tenu de l'augmentation du taux de fibres et de la modification des conditions d'injection qui en découle, la résine s'écoule préférentiellement dans les interstices qui existent entre le moule et la préforme de fibres sèches, notamment sur les bords périphériques de la pièce. Etant donné que la résine est injectée par une première extrémité du moule pour en ressortir par l'extrémité opposée, cette circulation préférentielle de la résine par les interstices formés sur les bords latéraux du moule a pour effet d'emprisonner de l'air dans la partie centrale de la préforme. Si aucune précaution n'est prise, la pièce obtenue est alors inutilisable puisqu'elle comprend une partie centrale sèche, c'est-à-dire dépourvue de résine.

Pour remédier à cet inconvénient et éviter la formation dans la pièce d'une poche dépourvue de résine, on a imaginé de placer dans les interstices précités un mastic de remplissage élastomère, avant la fermeture du moule et l'injection de la résine. Cependant, il n'est pas toujours facile de remplir efficacement les interstices pour éviter qu'un chemin d'écoulement préférentiel n'y subsiste pour la résine. De plus, un tel mastic de remplissage constitue un matériau jetable. Cela signifie que le moule doit être surdimensionné par rapport à la pièce à réaliser et que les rebords de la pièce comportant le mastic doivent être détourés lorsque la pièce a été démoulée.

Par conséquent, lorsque le taux de fibres de la pièce à fabriquer devient élevé, le procédé RTM perd l'un de ses avantages les plus importants, qui est d'obtenir par simple démoulage une pièce présentant ses cotes définitives, précises et reproductibles.

### Exposé de l'invention

L'invention a précisément pour objet un procédé de fabrication d'une pièce en matériau composite, selon la technique RTM, permettant d'obtenir dès le démoulage une pièce présentant des cotes définitives, précises et reproductibles, même lorsque le taux de fibres est élevé.

Conformément à l'invention, ce résultat est obtenu par un procédé de fabrication d'une pièce en matériau composite, comprenant les étapes suivantes :
- mise en place dans un moule d'une préforme sèche ;
- injection de résine dans le moule ;
- polymérisation de la résine ;
- démoulage de la pièce ainsi obtenue,
caractérisé par le fait que l'étape d'injection de la résine est précédée des étapes suivantes :
- mise en place d'une colle intumescente entre le moule et la préforme, le long d'au moins un bord de la pièce à fabriquer ;
- chauffage du moule, de façon à assurer le gonflement et la polymérisation de la colle, de telle sorte que ledit bord de la pièce obtenue est formé de la colle gonflée et polymérisée.

L'utilisation d'une colle intumescente facilite sa mise en place tout en assurant un remplissage efficace des interstices, garant de l'obtention d'une pièce dépourvue de zone sèche.

De plus, et de façon essentielle, la colle polymérisée fait partie intégrante de la pièce terminée. La pièce est donc à ses cotes définitives dès le démoulage, quel que soit son taux de fibres. On bénéficie ainsi pleinement du dimensionnement précis et reproductible des pièces qui découle normalement de l'utilisation de la technique RTM.

De préférence, la polymérisation de la colle, puis celle de la résine sont effectuées lors d'un cycle unique, sans ouverture du moule entre sa fermeture qui suit la mise en place de la colle et l'ouverture nécessaire au démoulage.

Lorsque la pièce comporte quatre bords périphériques et lorsque l'injection de la résine s'effectue au travers de moyens d'injection qui débouchent en face d'un premier des quatre bords, et la sortie de la résine par des moyens d'évacuation qui débouchent en face d'un deuxième bord opposé au premier, on place de la colle intumescente le long des deux autres bords de la pièce.

Lorsque la pièce à fabriquer est une pièce en forme de panneau comportant deux faces opposées et quatre bords périphériques, et lorsque l'injection de la résine s'effectue au travers de moyens d'injection qui débouchent sur l'une des faces, et la sortie de la résine par des moyens d'évacuation qui débouchent sur l'autre face, on place de la colle intumescente le long des quatre bords périphériques de la pièce.

Dans le cas où le moule comporte un noyau délimitant un évidement dans la pièce à fabriquer, on place de la colle intumescente le long du bord de l'évidement.

Avantageusement, on utilise une colle intumescente et une résine présentant des températures de polymérisation sensiblement égales.

De préférence, la colle intumescente utilisée est une résine époxy.

L'invention a aussi pour objet une pièce en matériau composite, comprenant une armature de renfort noyée dans une résine, caractérisée par le fait qu'au moins un bord de la pièce est formé d'une colle intumescente dépourvue d'armature de renfort.

Dans une première forme de réalisation, la pièce présente une structure monolithique qui comprend l'armature de renfort noyée dans la résine.

Dans une deuxième forme de réalisation, la pièce présente une structure sandwich et comporte une âme alvéolaire et deux peaux comprenant chacune une armature de renfort noyée dans la résine.

### Brève description des dessins

On décrira à présent, à titre d'exemples non limitatifs, différentes formes de réalisation de l'invention, en se référant aux dessins annexés, dans lesquels :
- la figure 1 est une vue en perspective, avec arrachements partiels, qui illustre la fabrication d'une pièce en matériau composite, selon une première forme de mise en oeuvre du procédé conforme à l'invention ;
- la figure 2 est une vue comparable à la figure 1, qui illustre la fabrication d'une pièce en matériau composite, selon une deuxième forme de mise en oeuvre du procédé conforme à l'invention ;
- la figure 3 est une vue en coupe représentant un bourrelet de colle intumescente juste après la fermeture du moule ;
- la figure 4 est une vue comparable à la figure 3, représentant le bourrelet de colle intumescente après son gonflement ;
- la figure 5 représente, en trait plein, l'évolution de la température T en fonction du temps t et, en traits discontinus, l'évolution de la pression P en fonction du temps t, lors de la mise en oeuvre du procédé selon l'invention ; et
- la figure 6 est une vue en coupe illustrant une troisième forme de mise en oeuvre du procédé selon l'invention.

### Exposé détaillé de formes de réalisation préférentielles

Les différentes figures illustrent la fabrication d'une pièce en matériau composite constituée par un panneau plan, de forme rectangulaire. De façon plus générale, l'invention concerne un procédé adapté à la fabrication de pièces de différentes formes, présentant deux faces opposées planes ou non planes, au moins un bord périphérique droit ou quelconque et, le cas échéant, un ou plusieurs évidements.

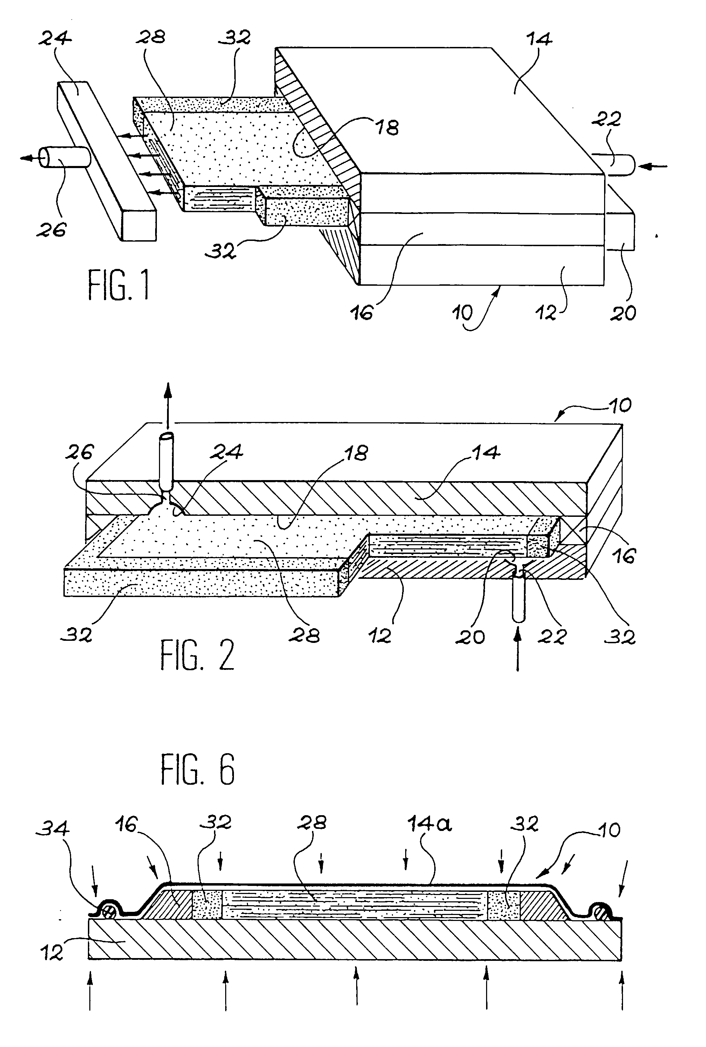

Dans les formes de réalisation illustrées schématiquement par les figures 1 et 2, la fabrication s'effectue dans un moule 10 qui comprend une plaque inférieure 12, une plaque supérieure amovible 14 et un cadre 16 disposé entre les plaques 12 et 14. Lorsque la pièce à fabriquer comporte un ou plusieurs évidements, le moule 10 comprend de plus un ou plusieurs noyaux amovibles (non représentés).

Les plaques 12 et 14, le cadre 16 et, le cas échéant, les noyaux amovibles, délimitent une empreinte 18 dont la forme et les dimensions sont complémentaires de celles de la pièce à fabriquer.

Dans la forme de réalisation illustrée sur la figure 1, un diffuseur 20 est intégré dans le cadre 16 du moule 10, pour permettre l'injection de la résine dans le plan de la pièce à fabriquer, le long de l'un des petits bords du rectangle formé dans ce cas par la pièce. Ce diffuseur 20 est relié à un système extérieur (non représenté) d'amenée de la résine, par un passage d'injection 22 qui traverse le cadre 16.

Un collecteur 24 est alors intégré au cadre 16, le long de l'autre petit bord du rectangle formé par la pièce, pour assurer la mise en dépression de l'empreinte 18 et récupérer l'excédent de résine. Le collecteur 24 est relié à un système extérieur (non représenté) de mise en dépression, par un passage de sortie 26 qui traverse le cadre 16.

Dans la forme de réalisation illustrée sur la figure 2, l'injection de la résine s'effectue par un diffuseur 20 intégré dans la plaque inférieure 12 du moule, à proximité de l'un des petits bords du rectangle formé par la pièce, et parallèlement à ce petit bord. Le passage d'injection 22 est alors formé dans la plaque inférieure 12.

De façon comparable, le collecteur 24 et le passage de sortie 26 sont logés dans la plaque supérieure 14 du moule. Plus précisément, le collecteur 24 est situé à proximité de l'autre petit bord du rectangle formé par la pièce, et orienté parallèlement à ce bord.

Dans les deux formes de réalisation illustrées par les figures 1 et 2, la fabrication de la pièce s'effectue de la façon suivante.

Dans un premier temps, on réalise une préforme sèche 28 destinée à constituer l'armature fibreuse de la pièce à fabriquer. Cette préforme 28 est constituée d'un ensemble de fibres, tissées ou non, non imprégnées de résine. Sa réalisation fait uniquement appel à des techniques connues, familières aux spécialistes du procédé R.T.M. et qui ne font pas partie de l'invention. La préforme 28 a, approximativement, la forme et les dimensions de la pièce à fabriquer.

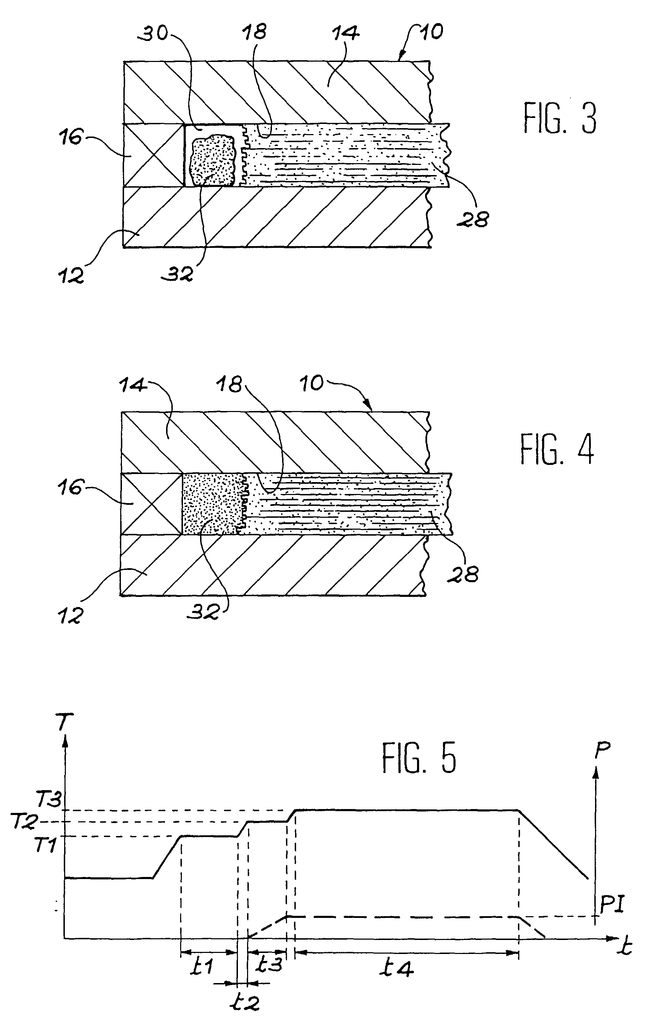

Après ouverture du moule 10, c'est-à-dire après enlèvement de la plaque supérieure 14 de ce moule, on place la préforme sèche 28 dans l'empreinte 18. La préforme 28 remplit alors l'empreinte pratiquement en totalité. Toutefois, comme on l'a représenté à plus grande échelle et de façon volontairement accentuée sur la figure 3, il existe des interstices 30 entre le cadre 16 du moule 10 et les bords périphériques de la préforme sèche 28. Dans la pratique, l'épaisseur maximale des interstices 30 est d'environ 2 mm. Lorsque la pièce à fabriquer comporte un ou des évidements, des interstices comparables existent également entre le ou les noyaux du moule et les bords des évidements prévus à cet effet dans la préforme.

Conformément à l'invention, on place alors une colle intumescente 32 dans les interstices 30 qui ne sont pas directement en face d'un diffuseur 20 ou d'un collecteur 24.

Ainsi, dans la forme de réalisation de la figure 1, on place une colle intumescente 32 dans les interstices qui séparent le cadre 16 de la préforme sèche 28, le long des deux grands bords du rectangle formé par la pièce.

Dans la forme de réalisation de la figure 2, on place une colle intumescente 32 dans les interstices précités, le long des quatre bords périphériques du rectangle formé par la pièce.

Dans le cas, non représenté, où la pièce à fabriquer comporte un évidement, on place également une colle intumescente entre le bord de l'évidement prévu à cet effet dans la préforme sèche et le noyau amovible du moule.

Avant d'être polymérisée, la colle intumescente 32 se présente sous la forme d'une pâte dont le volume est sensiblement inférieur à celui qu'elle présente lorsqu'elle est polymérisée. Cette caractéristique autorise une mise en place aisée de la colle dans les interstices 30, sans calibrage, par exemple sous la forme d'un bourrelet comme l'illustre la figure 3.

On utilise de préférence une colle intumescente dont la classe de température est identique ou voisine de celle de la résine que l'on désire injecter dans la préforme sèche 28. En d'autres termes, les températures de polymérisation de la colle et de la résine sont identiques ou voisines.

La colle intumescente 32 est une résine époxy telle que la colle intumescente "3024" de la Société "3M".

Lorsque la mise en place de la colle intumescente 32 a été effectuée, on ferme le moule 10 en remettant en place la plaque supérieure 14.

Le moule 10 est ensuite placé dans un autoclave ou dans une étuve, pour soumettre l'ébauche de pièce aux étapes ultérieures de sa fabrication.

Dans un premier temps, la pièce est maintenue sous pression atmosphérique et on élève la température de l'ambiante à une valeur T1 (figure 5). Cette température T1 est la température de polymérisation de la colle intumescente 32 (par exemple, 130° à 150°). La durée tl de la polymérisation de la colle est, au plus, d'environ 20 à 30 min.

Au cours de cette étape, la colle intumescente 32 gonfle (par exemple, de 170 % % à 370 % environ) pour occuper sensiblement tout le volume des interstices 30 dans lesquels elle a été placée. Il n'existe alors plus de communication directe entre le diffuseur 20 et le collecteur 24 au travers de ces interstices. De plus, la colle s'infiltre alors dans la bordure de l'ébauche 28, pour faire corps avec cette dernière.

Du fait de leur gonflement, illustré sur la figure 4, les bourrelets de colle 32 présentent alors une très faible densité. Cette caractéristique est particulièrement appréciable dans l'industrie aéronautique, puisque la colle polymérisée fait partie intégrante de la pièce finie, dont elle constitue au moins une partie des rebords périphériques.

A ce stade, le moule 10 est maintenu fermé et la température est soit inchangée si la température T2 d'injection de la résine est la même que la température T1 de polymérisation de la colle, soit adaptée à la température T2 d'injection de la résine si ces deux températures sont différentes. De façon générale, il est à noter que la température T2 d'injection de la résine est au plus légèrement supérieure à la température T1 de polymérisation de la colle.

La figure 5 illustre le cas où la température T2 d'injection de la résine est légèrement supérieure à la température T1 de polymérisation de la colle. Dans ce cas, l'injection de la résine est précédée d'une étape d'adaptation de la température du moule 10, permettant d'amener ce dernier à la température T2 d'injection de la résine. La durée t2 de cette étape d'adaptation de la température dépend de la différence entre les températures T2 et T1.

Dans le cas (non représenté) où la température T2 est inférieure à la température T1, le moule 10 peut être soit refroidi naturellement, soit refroidi au moyen d'un système de refroidissement intégré. Dans le cas illustré sur la figure 2 où la température T2 est légèrement supérieure à la température T1, le chauffage du moule 10 est poursuivi.

Dès que la température T2 d'injection de la résine est atteinte, cette injection est réalisée par le passage 22 et le diffuseur 20, sous une pression qui augmente progressivement jusqu'à une valeur PI. Dès le début de l'injection de la résine ou légèrement avant, une dépression est créée dans l'empreinte 18 du moule 10 par le collecteur 24 et le passage 26. A titre d'exemple, la valeur de cette dépression peut être d'1 hPa.

Les caractéristiques de température et de pression concernant cette étape d'injection de la résine dépendent essentiellement de la nature de la résine injectée. A titre d'exemple, cette injection peut se faire à une température T2 d'environ 130°C et à une pression PI d'environ 3 hPa. A titre indicatif, la viscosité de la résine utilisée dans la technique R.T.M. est habituellement comprise entre 10 mPa.s et 30 mPa.s.

La durée t3 de l'injection de la résine dépend principalement du volume de résine à injecter dans le moule 10, c'est-à-dire des dimensions de la pièce à fabriquer. A titre d'illustration, l'étape d'injection peut durer environ 10 min à 45 min.

Toujours sans ouvrir le moule 10, on procède ensuite à la polymérisation de la résine précédemment injectée, en maintenant la pression PI dans le moule. A cet effet, on élève la température du moule jusqu'à une température T3 correspondant à la température de polymérisation de la résine et on maintient cette température pendant un temps t4 nécessaire à l'achèvement de cette polymérisation. A titre d'illustration nullement limitative, la température T3 peut être par exemple d'environ 160°C et le temps t4 d'environ 2 heures.

Les étapes d'injection, puis de polymérisation de la résine sont des étapes classiques de la technique R.T.M..

Grâce au gonflement de la colle intumescente 32 dans les interstices 30 avant l'injection de la résine dans le moule, le chemin préférentiel constitué par ces interstices est fermé. La résine injectée dans l'empreinte 18 par le diffuseur 20 s'écoule donc de façon relativement uniforme dans la préforme sèche 28, vers le collecteur 24, même lorsque le taux de fibres est particulièrement élevé (par exemple, 55 à 60 % de la pièce finie) comme c'est notamment le cas dans l'industrie aéronautique. On évite ainsi la création d'une zone sèche, c'est-à-dire dépourvue de résine, dans la pièce fabriquée.

Par ailleurs, lorsque le démoulage est effectué par enlèvement de la plaque supérieure 14 du moule, la colle intumescente 32 polymérisée fait partie intégrante de la pièce obtenue, du fait de ses caractéristiques voisines de celles de la résine. On obtient donc directement une pièce présentant les dimensions précises et reproductibles de l'empreinte 18 du moule. On bénéficie ainsi pleinement des avantages qui découlent de l'utilisation de la technique R.T.M..

Comme l'illustre la figure 6, le procédé selon l'invention peut aussi être utilisé dans le cas où la plaque supérieure du moule 10 est remplacée par une vessie étanche 14a qui coopère de façon étanche avec la plaque inférieure 12 par l'intermédiaire d'un joint d'étanchéité 34. Il est à noter que le diffuseur et le collecteur servant à injecter la résine dans le moule n'ont pas été illustrés, afin de faciliter la lecture de la figure.

Dans cette forme de réalisation de la figure 6, les différentes étapes du procédé de fabrication sont identiques à celles qui ont été décrites précédemment. Toutefois, comme l'illustrent les flèches, l'injection de la résine s'effectue tout en appliquant à l'extérieur du moule une contre pression légèrement supérieure à la pression d'injection.

Enfin, il est important d'observer que le procédé selon l'invention peut aussi être utilisé pour fabriquer une pièce comportant une âme alvéolaire, par exemple en nid d'abeilles, et deux peaux placées de part et d'autre de cette âme. Les peaux comprennent alors chacune une armature de renfort dans laquelle s'effectue l'injection de résine.

## Revendications

1. Procédé de fabrication d'une pièce en matériau composite, comprenant les étapes suivantes :
- mise en place dans un moule (10) d'une préforme sèche (28) ;
- injection de résine dans le moule (10) ;
- polymérisation de la résine ;
- démoulage de la pièce ainsi obtenue,
caractérisé par le fait que l'étape d'injection de la résine est précédée des étapes suivantes :
- mise en place d'une colle intumescente (32) entre le moule (10) et la préforme (28), le long d'au moins un bord de la pièce à fabriquer ;
- chauffage du moule (10), de façon à assurer le gonflement et la polymérisation de la colle, de telle sorte que ledit bord de la pièce obtenue est formé de la colle gonflée et polymérisée.

2. Procédé selon la revendication 1, caractérisé par le fait que le moule (10) est fermé après la mise en place de la colle intumescente (32) pour n'être ouvert que lors du démoulage de la pièce.

3. Procédé selon l'une quelconque des revendications 1 et 2, caractérisé par le fait que, la pièce à fabriquer comportant quatre bords périphériques, l'injection de la résine s'effectuant au travers de moyens d'injection (20,22) qui débouchent en face d'un premier des quatre bords, et la sortie de la résine par des moyens d'évacuation (24,24) qui débouchent en face d'un deuxième bord opposé au premier, on place de la colle intumescente (32) le long des deux autres bords de la pièce.

4. Procédé selon l'une quelconque des revendications 1 et 2, caractérisé par le fait que, la pièce à fabriquer étant une pièce en forme de panneau comportant deux faces opposées et quatre bords périphériques, l'injection de la résine s'effectuant au travers de moyens d'injection (20,22) qui débouchent sur l'une des faces, et la sortie de la résine par des moyens d'évacuation (24, 26) qui débouchent sur l'autre face, on place de la colle intumescente (32) le long des quatre bords périphériques de la pièce.

5. Procédé selon l'une quelconque des revendications précédentes, caractérisé par le fait que, le moule (10) comportant un noyau délimitant un évidement dans la pièce à fabriquer, on place de la colle intumescente (32) le long du bord de l'évidement.

6. Procédé selon l'une quelconque des revendications précédentes, caractérisé par le fait qu'on utilise une colle intumescente (32) et une résine présentant des températures de polymérisation sensiblement égales.

7. Procédé selon l'une quelconque des revendications précédentes, caractérisé par le fait qu'on utilise une colle intumescente (32) constituée par une résine époxy.

8. Pièce en matériau composite, comprenant une armature de renfort (28) noyée dans une résine, caractérisée par le fait qu'au moins un bord de la pièce est formé d'une colle intumescente (32), dépourvue d'armature de renfort.

9. Pièce selon la revendication 8, caractérisée par le fait que la pièce présente une structure monolithique comprenant l'armature de renfort (28) noyée dans la résine.

10. Pièce selon la revendication 8, caractérisée par le fait que la pièce présente une structure sandwich et comporte une âme alvéolaire et deux peaux comprenant chacune une armature de renfort noyée dans la résine.

## Patentansprüche

1. Verfahren zur Herstellung eines Gegenstands aus Verbundwerkstoff, das die folgenden Schritte umfasst:
- Einsetzen eines Trockenformteils (28) in eine Form (10);
- Einspritzen von Harz in die Form (10);
- Polymerisieren des Harzes;
- Ausformen des derart hergestellten Gegenstands,
d**adurch gekennzeichnet,** dass dem Harz-Einspitzschritt folgende Schritte vorausgehen:
- Anbringen eines quellfähigen Klebstoffs (32) zwischen der Form (10) und dem Formteil (28) längs wenigstens eines Rands des herzustellenden Gegenstands;
- Heizen der Form (10), um das Anschwellen und Polymerisieren des Klebstoffs herbeizuführen, sodass der genannte Rand des hergestellten Gegenstands durch den aufgequollenen und polymerisierten Klebstoff gebildet wird.

2. Verfahren nach Anspruch 1, dadurch gekennzeichnet, dass die Form (10) nach dem Anbringen des quellfähigen Klebstoffs (32) geschlossen wird und erst beim Ausformen des Gegenstands wieder geöffnet wird.

3. Verfahren nach einem der Ansprüche 1 und 2, dadurch gekennzeichnet, wobei der herzustellende Gegenstand vier periphere Ränder aufweist, das Einspitzen des Harzes durch Einspritzeinrichtungen (20,22) erfolgt, die vor einem ersten der vier Ränder münden, und das Austreten des Harzes durch Auslassöffnungen (24,26) erfolgt, die vor einem zweiten, dem ersten Rand gegenüberstehenden Rand münden,
dass man den quellfähigen Klebstoff (32) längs der beiden anderen Ränder des Gegenstands anbringt.

4. Verfahren nach einem der Ansprüche 1 und 2, dadurch gekennzeichnet, wobei der herzustellende Gegenstand ein tafelförmiger Gegenstand mit zwei entgegengesetzten Seiten und vier peripheren Rändern ist, das Einspritzen des Harzes durch Einspritzeinrichtungen (20,22) erfolgt, die auf einer der Seiten münden, und das Austreten des Harzes durch Auslassöffnungen (24,26), die auf der anderen Seite münden,
dass man den quellfähigen Klebstoff (32) längs der vier peripheren Ränder des Gegenstands anbringt.

5. Verfahren nach einem der vorangehenden Ansprüche, dadurch gekennzeichnet, wobei die Form (10) einen Kern umfasst, der in dem herzustellenden Gegenstand eine Aussparung abgrenzt, dass man den quellfähigen Klebstoff (32) längs des Randes der Aussparung anbringt.

6. Verfahren nach einem der vorangehenden Ansprüche, dadurch gekennzeichnet, dass man einen quellfähigen Klebstoff (32) und ein Harz verwendet, die im wesentlichen die gleichen Polymerisationstemperaturen aufweisen.

7. Verfahren nach einem der vorangehenden Ansprüche, dadurch gekennzeichnet, dass man einen durch ein Expoxydharz gebildeten quellfähigen Klebstoff (32) verwendet.

8. Gegenstand aus Verbundwerkstoff mit einer in ein Harz eingegossenen Verstärkungseinlage (28), dadurch gekennzeichnet, dass wenigstens ein Rand des Gegenstands durch einen quellfähigen Klebstoff (32) gebildet wird, ohne Verstärkungseinlage.

9. Gegenstand nach Anspruch 8, dadurch gekennzeichnet, dass der Gegenstand eine die in das Harz eingegossene Verstärkungseinlage (28) umfassende monolithische Struktur aufweist.

10. Gegenstand nach Anspruch 8, dadurch gekennzeichnet, dass der Gegenstand eine Sandwich-Struktur mit einem zellenförmigen Kern und zwei Außenschichten aufweist, von denen jede eine in das Harz eingegossene Verstärkungseinlage umfasst.

## Claims

1. Process for manufacturing a composite component, comprising the following steps:
- putting a dry preform (28) in a mould (10);
- injecting resin into the mould (10);
- curing the resin;
- demoulding the component thus obtained,
characterized in that the step of injecting the resin is preceded by the following steps:
- putting an intumescent adhesive (32) between the mould (10) and the preform (28), along at least one edge of the component to be manufactured;
- heating the mould (10) so as to ensure that the adhesive swells and cures in such a way that the said edge of the component obtained is formed from the swollen and cured adhesive.

2. Process according to Claim 1, characterized in that the mould (10) is closed after pucting in the intumescent adhesive (32) and only opened when demoulding the component.

3. Process according to either of Claims 1 and 2, characterized in that, since the component to be manufactured has four peripheral edges, the resin being injected through injection means (20, 22) which emerge facing a first of the four edges and the resin exiting via discharge means (24, 24) which emerge facing a second edge opposite the first, intumescent adhesive (32) is placed along the other two sides of the component.

4. Process according to either of Claims 1 and 2, characterized in that, since the component to be manufactured is a panel-shaped component having two opposite faces and four peripheral edges, the resin being injected through injection means (20, 22) which emerge on one of the faces and the resin exiting via discharge means (24, 26) which emerge on the other face, intumescent adhesive (32) is placed along the four peripheral edges of the component.

5. Process according to any one of the preceding claims, characterized in that, since the mould (10) has a core defining a cavity in the component to be manufactured, intumescent adhesive (32) is placed along the edge of the cavity.

6. Process according to any one of the preceding claims, characterized in that an intumescent adhesive (32) and a resin which have approximately equal curing temperatures are used.

7. Process according to any one of the preceding claims, characterized in that an intumescent adhesive (32) consisting of an epoxy resin is used.

8. Composite component comprising a reinforcement (28) embedded in a resin, characterized in that at least one edge of the component is formed from an intumescent adhesive (32) devoid of reinforcement.

9. Component according to Claim 8, characterized in that the component has a monolithic structure comprising the reinforcement (28) embedded in the resin.

10. Component according to Claim 8, characterized in that the component has a sandwich structure and includes a cellular core and two skins, each comprising a reinforcement embedded in the resin.
